# EUROPÄISCHE PATENTSCHRIFT

(11) **EP 1 695 751 B1**
(45) Veröffentlichungstag und Bekanntmachung des Hinweises auf die Patenterteilung: **15.04.2009**
(21) Anmeldenummer: 06101570.7
(22) Anmeldetag: 13.02.2006
(51) Int. Cl.: B01D 29/11

(54) **Kunststoffendscheibe**
Plastic end-cap
Capuchon d'extrémité en matière plastique

(30) Priorität: 26.02.2005 DE 102005008935
(43) Veröffentlichungstag der Anmeldung: 30.08.2006
(73) Patentinhaber: MANN+HUMMEL GmbH, 71638 Ludwigsburg (DE)
(72) Erfinder: Kolczyk, Markus, 74395, Mundelsheim (DE); Kreiner, Anton, 94419 Reisbach (DE)

(56) Entgegenhaltungen:
- EP-A- 1 031 367
- EP-A- 1 136 666
- WO-A-20/04004864
- DE-A1- 10 046 494
- DE-A1- 19 838 401

## Beschreibung

### Technisches Gebiet

Die Erfindung betrifft eine Kunststoffendscheibe für ein hohlzylindrisches Filterelement gemäß dem Oberbegriff des Patentanspruches 1. Weiterhin betrifft die Erfindung ein Herstellungsverfahren nach Anspruch 10.

### Stand der Technik

Derartige Kunststoffendscheiben haben die Aufgabe, eine meist ringförmige Zone zu bilden, in die ein Filtermedium dichtend eingebettet werden kann. Weiterhin muss die Kunststoffendscheibe über eine Anschlusskontur verfügen, welche zur Herstellung einer dichten und lösbaren Verbindung zu einem Anschlusselement geeignet ist. Eine solche Endscheibe ist beispielsweise in der DE 199 19 289 offenbart. Hierbei wird die Herstellung einer Kunststoffplatte beschrieben, die zum dichten Abschluss mit einem Filtermedium dient. Dazu werden aufeinander gelegte Kunststoffscheiben verwendet die unterschiedliche thermische Eigenschaften aufweisen, wodurch diese durch induktive Behandlung selektiv erhitzt werden können. Aufgabe der Endscheibe ist es auch, einerseits eine mechanische Steifigkeit des Filterelementes herzustellen und andererseits eine möglichst elastische Dichtkontur gegenüber einem Anschlusselement zu erreichen. Diese Anforderungen sind bei der gezeigten Endscheibe nur durch zusätzliche Dichtelemente, wie beispielsweise Elastomerringe oder Filzringe, möglich. Dadurch entsteht ein erheblicher Material- und Montageaufwand, wodurch die Endscheibe aufwendig und teuer herzustellen ist.
Die EP1031367 A1 zeigt einen Flüssigkeitsfilter eines Fahrzeug-Verbrennungsmotors mit einem austauschbaren, ringförmigen Filterelement mit einer ersten und einer zweiten axialen Endscheibe mit einem axial außen ersten Bereich aus einem elastischen Werkstoff und einem dem Filterelement zugewandten Bereich aus einem weniger elastischen Material.
In der Schrift DE 10046494 A1 wird ein Filter, insbesondere für das Öl einer Brennkraftmaschine offenbart, bei der das Filterelement eine Endscheibe aufweist, an die eine Elastomerplatte angeklebt oder im 2-Komponenten-Herstellverfahren mit dieser Endscheibe verbunden ist.
Das Dokument EP1136666 A1 beschreibt einen Flüssigkeitsfilter, insbesondere eine Ölfilter für eine Brennkraftmaschine mit einem Umgehungsventil, bei dem der Ventilsitz durch die Endscheibe des Filterelementes gebildet ist. Es wird vorgeschlagen, den im Filtereinsatz beweglich gelagerten Ventilkörper mit einem Dichtungsteller in Zweikomponenten-Spritztechnik herzustellen, um so eine Elastomerschicht auf dem Ventilkörper zu erhalten, welche mit dem Ventilsitz in Eingriff steht.
Der Veröffentlichung WO2004/004864 A1 ist eine Filtereinheit mit einer zweilagigen Endscheibe zu entnehmen. Es wird eine Endscheibe bestehend aus einem Elastomer auf der Außenseite und einem Thermoplast auf der Innenseite vorgeschlagen Es werden verschiedene Möglichkeiten aufgezeigt, die zwei unterschiedlichen Materialien zu verbinden: Ein Einspritzen des zweiten Materials in das erste oder das Erweichen der zwei Materialien mit einem Heizblock.
Aufgabe der Erfindung ist es, eine ausreichend starre Endscheibe zu schaffen, welche oben genannte Nachteile vermeidet, einfach herzustellen, wirtschaftlich und zuverlässig mit dem Filtermedium verbindbar ist und eine Dichtkontur mit ausreichender Elastizität aufweist. Diese Aufgabe wird durch die Ansprüche 1 und 10 erfüllt.

### Offenbarung der Erfindung

Die Erfindung beruht auf dem Gedanken, die unterschiedlichen Anforderungen an die Kunststoffendscheibe durch die Verwendung unterschiedlicher Materialien zu erreichen. Dazu werden zwei als Rohling vorgefertigte Kunststofflagen beispielsweise durch Infrarot-, Kontaktwärme-oder Laserschweißen flächig miteinander verbunden. Dadurch kann eine mechanisch starre Lage mit einer mechanisch elastischeren Lage zu einer Endscheibe vereinigt werden. Es besteht auch die Möglichkeit, ein 2-K-Komponenten-Spritzgussteil zu verwenden. Zur Verbindung der elastischen Lage mit einer Stirnseite des Filtermediums und der starren Lage wird die elastische Lage angeschmolzen und mit den beiden Verbindungspartnern verschweißt. Die starre Lage übernimmt die Trägerfunktion und die elastische Lage erfüllt die Dichtfunktion des Filterelementes gegenüber einem Anschlusselement. Das Anschlusselement kann beispielsweise eine axiale oder radiale Gehäusekante sein, die mit der Umfangskontur der Endscheibe korrespondiert. Als Materialien für die starre Lage der Endscheibe eignen sich beispielsweise Polyamid, Polypropylen, Polyoxymethylen (POM) oder Polybutylenterephthalat (PBT), denen zur zusätzlichen Stabilisierung beispielsweise Glasfaser beigemengt werden können. Als Materialien für die elastische Lage eignen sich beispielsweise Polyamid 12 (PA 12), Polyamid 612 (PA 612), thermoplastisches Elastomer (TPE), Polyethylen (PE) bzw. alle weichen Thermoplaste. Die Endscheibe kann in Filterelementen zur Filtration von annähernd allen flüssigen und gasförmigen Medien, wie beispielsweise Luft, Öl, Kraftstoff oder Wasser eingesetzt werden.

Durch die elastische Kunststofflage wird eine geschlossene Berührung an den Berührflächen zum Anschlusselement verbessert und dadurch die Dichtheit optimiert. Auf zusätzliche Dichtelemente wie Elastomer- oder Filzringe kann bei der erfindungsgemäßen Endscheibe verzichtet werden, wodurch eine wirtschaftlich herstellbare, kostengünstige Endscheibe geschaffen ist.

In einer weiterführenden Ausgestaltung der Erfindung ist der Schmelzpunkt der elastischen Lage niedriger als der Schmelzpunkt der starren Lage. Dadurch kann die zur Anschmelzung der elastischen Kunststoffendscheibe notwendige Wärmeenergie beispielsweise über die starre Lage mittels Kontaktwärme übertragen werden. Dies erlaubt es, mit einem gezielten Temperaturwert nur die elastische Lage anzuschmelzen und ein unerwünschtes Erweichen der starren Lage auszuschließen.

Gemäß einer weiteren Variante ist die Anschlusskontur der elastischen Lage als eine Radialdichtung vorgesehen. Diese korrespondiert beispielsweise mit einer Umfangskontur einer Gehäusewandung. Das Filterelement kann somit in ein Gehäuse eingeschoben werden und eine Abdichtung über die gesamte Einschubtiefe herstellen. Dies bietet zusätzlich zur Abdichtung den Vorteil, dass beim Entfernen des Filterelementes aus dem Gehäuse grobe Partikel, die sich an der Radialdichtung angesammelt haben, durch diese abgestreift werden.

In einer weiterentwickelten Ausführungsform überragt die elastische Kunststofflage die starre Kunststofflage konzentrisch zum Filtermedium oder zur starren Kunststofflage. Dadurch entsteht zwischen einer Kante der starren Kunststofflage und einer Berührfläche des Anschlusselementes ein radialer Spalt über den sich die radialelastische Anschlusskontur erstrecken kann. Dadurch ist es vorteilhaft möglich, Toleranzen zwischen Anschlusskontur und Anschlusselement zu überbrücken und durch die elastische Kunststofflage eine Vorspannung auf die Berührfläche des Anschlusselementes zu erzeugen. Dies kann beispielsweise dadurch erreicht werden, dass die Anschlusskontur der elastischen Lage in demontiertem Zustand einen geringeren Durchmesser aufweist als ein als Anschlusselement dienender Rohrstutzen. Dadurch wird die Dichtheit optimiert, und die erforderlichen Montagekräfte lassen sich reduzieren.

Eine weitere Ausgestaltung der Erfindung sieht vor, dass die Anschlusskontur eine kreisrunde, konzentrische Öffnung innerhalb der Endscheibe ist. An einem hohlzylindrischen Filterelement wird die Endscheibe üblicherweise von einem als zylindrischen Rohrstutzen ausgebildeten Anschlusselement durchdrungen. Durch diese Anordnung wird die Abdichtung zwischen Anschlusskontur und Anschlusselement als dichte Trennung zwischen einer ungefilterten Roh- und einer gefilterten Reinseite genutzt. Das Anschlusselement kann auch beide Endscheiben des Filterelementes durchdringen und gleichzeitig zur Befestigung des Filterelementes verwendet werden.

Gemäß einer Ausführungsform der Erfindung ist an der Anschlusskontur der elastischen Lage ein Dichtprofil dergestalt angeformt, dass dieses eine erhöhte radiale Elastizität aufweist. Dies kann beispielsweise in Form einer Dichtlippe erreicht werden, die sich über eine axiale Länge erstreckt und sich zu einer Dichtkante hin verjüngt. Die Abdichtung kann auch als eine bogenförmige oder flächige Anlagefläche zum Anschlusselement gestaltet werden kann. Durch diese Maßnahme werden die Montagekräfte weiter reduziert und die möglichen Toleranzen erhöht. Dies ist insbesondere auch dort von Vorteil, wo aufgrund beengter Raumverhältnisse das Filterelement zur Montage schwer zugänglich ist oder nur angewinkelt angesetzt werden kann.

In einer weiteren vorteilhaften Ausgestaltung ist die Anschlusskontur der elastischen Lage als ein Dichtprofil derart ausgeformt, dass sich bei der Montage des Filterelementes die Einführung in das Anschlusselement erleichtert. Dies kann beispielsweise durch eine zur Filterachse angewinkelte Einführungsphase oder durch angewinkelte Dichtlippen erreicht werden, wobei die Dichtlippen zusätzlich noch eine radiale Elastizität aufweisen. Neben der vereinfachten Montage wird durch diese Gestaltung die Gefahr der Beschädigung des elastischen Dichtprofils durch das Anschlusselement minimiert.

Um die Eigenschaften der Endscheibe in einer weiteren Gestaltungsform zu optimieren, können auch an der starren Kunststofflage Konturen zur Vereinfachung der Montage angeformt sein. Dies kann auch hier beispielsweise durch eine zur Filterachse angewinkelte Montageschräge erreicht werden. Um diese Konturen ausreichend zu dimensionieren, kann in diesem Bereich beispielsweise ein die Endscheibe radial überragender Ringbund angeformt sein, der auch gleichzeitig als Auflagefläche gegenüber einer Auflagekontur dient. Diese Gestaltung vereinfacht eine schnelle und sichere Montage des Filterelementes und nutzt die mechanisch widerstandsfähige Oberfläche der starren Kunststofflage zum Schutz der mechanisch weicheren Dichtkontur.

Gemäß einer weiteren Gestaltung ist die starre Endscheibe aus einem Polyamid gebildet. Damit kommt ein Werkstoff zum Einsatz, der die mechanischen, chemischen und thermischen Anforderungen an eine Vielzahl von möglichen zu filternden Medien erfüllt.

Der Werkstoff der elastischen Lage wird in einer weiteren Ausführungsform aus einem thermoplastischen Elastomer gebildet, beispielsweise können dazu thermoplastische Copolyester Elastomere (TPE-E) bzw. Polyether-Block-Amide (TPE-A) verwendet werden. Hierdurch wird eine dauerhafte, beständige Dichtheit gewährleistet. Diese Materialien stehen zu einem günstigen Preis zur Verfügung und weisen eine hohe thermische, chemische und mechanische Stabilität auf.

In einem weiteren Teil der Erfindung wird ein Verfahren vorgeschlagen, welches die Herstellung einer Endscheibe nach Anspruch 1 beschreibt.

Dazu wird eine als Rohling vorhandene starre Lage in eine Aufnahme eingelegt. Als Rohling kann auch ein 2-K-Teil (2-Komponenten-Spritzguss) verwendet werden. Im nächsten Schritt wird eine ebenfalls als Rohling vorhandene elastische Lage auf die starre Lage aufgelegt. Die Positionierung der beiden Lagen zueinander bzw. zur Aufnahme kann dabei über Konturen der Aufnahme und/oder der einzelnen Lagen erfolgen. Zur Verbindung der beiden Lagen miteinander werden diese im nächsten Schritt an den einander zugewandten Seiten durch thermische Energie angeschmolzen. Die thermische Erhitzung kann beispielsweise durch Laserstrahlung, Kontaktwärme oder Infrarotstrahlung zugeführt werden. Bei der Erhitzung durch Infrarotstrahlung empfiehlt es sich, die nicht anzuschmelzenden Dichtkonturen durch eine Blende abzuschirmen. In die angeschmolzene elastische Lage wird im nächsten Schritt ein Filtermedium eingebracht. Das Filtermedium wird mittels einer Druckkraft oder einer Lagepositionierung in der jetzt verbundenen Endscheibe solange fixiert, bis eine Verbindung erfolgt ist. Nach einer Aushärtephase kann das Filterelement aus der Aufnahme entnommen werden.

Das Anschmelzen der elastischen Lage ist vorteilhaft, die elastische Lage sollte den niedrigen Schmelzpunkt aufweisen.

Ein weiterer Teil der Erfindung ist ein Filterelement, welches wenigstens eine Endscheibe nach Anspruch 1 aufweist. Dabei ist ein vorzugsweise zickzackförmig und hohlzylindrisch gefaltetes Filtermedium zwischen zwei Endscheiben eingeschweißt. Dazu ist zumindest eine Endscheibe mit einer zylindrischen Öffnung versehen, welche zur dichten und lösbaren Verbindung mit einem Anschlusselement dient.

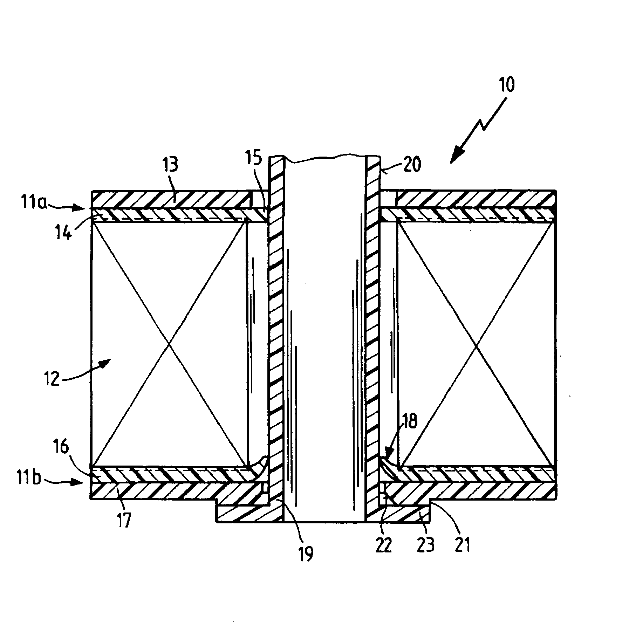

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Kurze Beschreibung der Zeichnungen

Ein Ausführungsbeispiel der Erfindung wird nachfolgend anhand einer Zeichnung erläutert.

### Ausführungsform(en) der Erfindung

Die Figur zeigt die Anordnung eines hohlzylindrischen Filterelementes 10 im Vollschnitt. In der Figur ist zwischen einer oberen Endscheibe 11a und einer unteren Endscheibe 11 b ein Filtermedium 12 an dessen beiden Stirnseiten in die Endscheiben 11a, 11 b eingeschmolzen. Die obere Endscheibe 11a besteht aus einer oberen Trägerlage 13 und einer oberen elastischen Lage 14, welche miteinander verschweißt sind. An der elastischen Lage 14 überragt eine obere Anschlusskontur 15 das Filtermedium 12 und die obere Trägerlage 13 an dessen radialer Innenseite und ist mit einer zylindrischen Dichtfläche 20 eines Anschlusselementes 19 in Berührung. Die Fläche zwischen der oberen Anschlusskontur 15 und der zylindrischen Dichtfläche 20 ist im gezeigten Beispiel planförmig ausgeführt, diese kann alternativ auch gewölbt oder mit einer Dichtkante ausgeformt werden.

Die untere Endscheibe 11 b bildet sich aus einer unteren Trägerlage 17 und einer unteren elastischen Lage 16, die Verbindung zwischen den Lagen 16, 17 und dem Filtermedium 12 ist wie an der oberen Endscheibe 11a durch Schmelzschweißen hergestellt. An der unteren elastischen Lage 16 ist eine untere Anschlusskontur 18 in einem Winkel zur Zylinderachse angeordnet und weist zu dieser eine axiale Länge auf. Durch diese Gestaltung der unteren Anschlusskontur 18 ist eine erhöhte radiale Elastizität gewährleistet. Die untere Anschlusskontur 18 ist mit der zylindrischen Dichtfläche 20 in Berührung, wobei diese Berührung an einer Kante der unteren Anschlusskontur stattfindet. An der unteren Trägerlage 17 ist zur radialen Innenseite hin eine Montageschräge 22 angeordnet, die als Montagehilfe beim Einführen des Filterelementes 10 in das Anschlusselement 19 dient. Zum Schutz der unteren Anschlusskontur 18 überragt die untere Trägerlage 17 das Filtermedium 12 an der radialen Innenseite. Ein angeordneter Ringbund 21 dient als Anlagefläche gegenüber einem Stützbund 23 des Anschlusselementes 19.

## Patentansprüche

1. Ein hohlzylindrisches Filterelement (10) mit mindestens einer Kunststoffendscheibe (11a, b), insbesondere für einen Flüssigkeitsfilter, wobei die Kunststoffendscheibe (11a, b) an einer Stirnseite mit einem Filtermedium (12) dichtend verbunden ist, und aus wenigstens zwei Kunststofflagen (13, 14 /16,17) gebildet wird, die im Wesentlichen planflächig miteinander verbunden sind und unterschiedliche Elastizitäten aufweisen, **dadurch gekennzeichnet, dass** die Kunststofflage mit erhöhter radialer Elastizität (14, 16) zum Abdichten gegen das Filtermedium(12) auf der dem Filtermedium (12) zugewandten Seite angeordnet ist und das Filtermedium (12) in die angeschmolzene elastische Lage (14, 16) der Endscheibe (11a, b) eingebracht worden ist und gegenüber der weniger elastischen, starren Kunststofflage (13, 17) einen niedrigeren thermischen Schmelzpunkt aufweist.

2. Ein hohlzylindrisches Filterelement nach Anspruch 1, **dadurch gekennzeichnet, dass** die starre Kunststoffauflage (13, 17) der Kunststoffendscheibe (11a, b) aus Polyamid, Polyoxymethylen (POM) oder Polybutylenterephthalat (PBT) gebildet ist.

3. Ein hohlzylindrisches Filterelement nach einem der vorherigen Ansprüche, **dadurch gekennzeichnet, dass** die elastische Kunststofflage (14, 16) der Kunststoffendscheibe (11a, b) aus einem thermoplastischen Elastomer (TPE) oder aus weichem Polyamid, z. B. Polyamid 12 (PA12) oder Polyamid 612 (PA 612), gebildet ist.

4. Ein hohlzylindrisches Filterelement nach einem der vorhergehenden Ansprüche, **dadurch gekennzeichnet, dass** die elastische Kunststofflage (14, 16) der Kunststoffendscheibe (11a, b) eine Anschlusskontur (18) derart aufweist, dass eine Radialdichtung gegenüber einem Anschlusselement (19) gebildet wird.

5. Ein hohlzylindrisches Filterelement nach einem der vorhergehenden Ansprüche, **dadurch gekennzeichnet, dass** die radial elastische Kunststofflage (14,16) der Kunststoffendscheibe (11a, b) die starre Kunststofflage (13, 17) an der Anschlusskontur (18) konzentrisch überragt.

6. Ein hohlzylindrisches Filterelement nach einem der Ansprüche 4 oder 5, **dadurch gekennzeichnet, dass** die Anschlusskontur (18) der Kunststoffendscheibe (11a, b) eine konzentrisch zum Filterelement (10) angeordnete kreisrunde Öffnung ist.

7. Ein hohlzylindrisches Filterelement nach Anspruch 4 bis 6, **dadurch gekennzeichnet dass** die Anschlusskontur (18) der Kunststoffendscheibe (11a, b) gegenüber dem Anschlusselement (19) geometrisch derart ausgestaltet ist, dass sich die radiale Elastizität erhöht.

8. Ein hohlzylindrisches Filterelement nach einem der Ansprüche 4 bis 7, **dadurch gekennzeichnet dass** die Anschlusskontur (18) der Kunststoffendscheibe (11a, b) derart ausgestaltet ist, dass sich die Montage mit dem Anschlusselement (19) erleichtert.

9. Ein hohlzylindrisches Filterelement nach einem der vorhergehenden Ansprüche,
**dadurch gekennzeichnet, dass** die starre Kunststofflage (13, 17) der Kunststoffendscheibe (11a, b) Konturen aufweist, welche die Montage mit der Anschlusselement (19) erleichtern.

10. Herstellungsverfahren für ein hohlzylindrisches Filterelement mit mindestens einer Kunststoffendscheibe (11a,b) mit einer starren Lage (13, 17) und einer elastischen Lage (14,16), die einen gegenüber der starren Lage niedrigeren thermischen Schmelzpunkt aufweist, umfassend folgende Schritte,
- das Einlegen einer starren Kunststofflage (13, 17) sowie einer elastischen Kunststofflage(14, 16) in eine Aufnahme und das Verbinden der starren Lage (13, 17) mit der elastischen Lage (14, 16)
oder
das Einlegen eines Zweikomponenten Kunststoffteils mit einer elastischen und einer starren Kunststofflage in eine Aufnahme
- Anschmelzen der mechanisch elastischen Lage (14, 16) durch eine Energiequelle,
- Einbringen eines Filtermediums (12) in die angeschmolzene Lage,
- Aushärten der Endscheibe (11a, b).

## Claims

1. A hollow cylindrical filter element (10) with at least one plastic end plate (11 a, b), in particular for a liquid filter, the plastic end plate (11 a, b) being sealingly connected at one front end with a filter medium (12) and being formed of at least two plastic layers (13, 14/16, 17) which are basically connected flush with each other and feature a different elasticity, **characterized in that** the plastic layer with increased radial elasticity (14, 16) is placed for sealing purposes against the filter medium (12) at the side facing the filter medium (12) and that the filter medium (12) is inserted into the fused-on elastic layer (14, 16) of the end plate (11 a, b) and features a lower thermal melting point than the less elastic, rigid plastic layer (13, 17).

2. A hollow cylindrical filter element according to claim 1, **characterized in that** the rigid plastic layer (13, 17) of the plastic end plate (11a, b) is made of polyamide, polyoxymethylene (POM) or polybutylenterephthalate (PBT).

3. A hollow cylindrical filter element according to one of the above-mentioned claims, **characterized in that** the elastic plastic layer (14, 16) of the plastic end plate (11a, b) is made either of a thermoplastic elastomer (TPE) or of soft polyamide, e.g. polyamide 12 (PA 12) or of polyamide 612 (PA 612).

4. A hollow cylindrical filter element according to one of the above-mentioned claims, **characterized in that** the elastic plastic layer (14, 16) of the plastic end plate (11a, b) features a connection contour (18) in such a way that a radial seal is formed in relation to a connection element (19).

5. A hollow cylindrical filter element according to one of the above-mentioned claims, **characterized in that** the radial elastic plastic layer (14, 16) of the plastic end plate (11a, b) projects concentrically above the rigid plastic layer (13, 17) at the connection contour (18).

6. A hollow cylindrical filter element according to claim 4 or 5, **characterized in that** the connection contour (18) of the plastic end plate (11 a, b) is a circular opening concentrically arranged in relation to the filter element (10).

7. A hollow cylindrical filter element according to one of the claims 4 to 6, **characterized in that** the connection contour ((18) of the plastic end plate (11a, b) in relation to the connection element (19) is designed geometrically in such a way that the radial elasticity increases.

8. A hollow cylindrical filter element according to one of the claims 4 to 7, **characterized in that** the connection contour (18) of the plastic end plate (11a, b) is designed in such a way that the assembly with the connection element (19) is facilitated.

9. A hollow cylindrical filter element according to one of the above-mentioned claims, **characterized in that** the rigid plastic layer (13, 17) of the plastic end plate (11a, b) features contours which facilitate the assembly with the connection element (19).

10. Manufacturing process for a hollow cylindrical filter element with at least one plastic end plate (11a, b) with a rigid layer (13, 17) and an elastic layer (14, 16) which features a lower thermal melting point than the rigid layer, comprising the following steps:
- placement of a rigid plastic layer (13, 17) and of an elastic plastic layer (14, 16) into a support and connection of the rigid layer (13, 17) with the elastic layer (14, 16)
or
- placement of a two-component plastic part with an elastic and a rigid plastic layer into a support
- fusing of the mechanically elastic layer (14, 16) by means of an energy source
- introduction of a filter medium (12) into the fused-on layer
- hardening of the end plate (11 a, b).

## Revendications

1. Élément filtrant (10) cylindrique creux avec au moins une plaque d'extrémité (11 a, b) en matière plastique, en particulier pour un filtre à liquides, la plaque d'extrémité (11a, b) en matière plastique étant reliée hermétiquement à un milieu filtrant (12) au niveau d'une face frontale et étant formée d'au moins deux couches de matière plastique (13, 14 / 16, 17) qui sont reliées l'une à l'autre pour l'essentiel dans un plan et présentent des élasticités différentes, **caractérisé en ce que** la couche de matière plastique (14, 16) d'élasticité radiale supérieure est placée à des fins d'étanchéité contre le milieu filtrant (12) du côté tourné vers le milieu filtrant (12) et que le milieu filtrant (12) a été inséré dans la couche élastique (14, 16) fondue de la plaque d'extrémité (11a, b) et présente, par rapport à la couche de matière plastique (13, 17) rigide de moindre élasticité, un point de fusion thermique plus bas.

2. Élément filtrant cylindrique creux selon la revendication 1, **caractérisé en ce que** la couche de matière plastique rigide (13, 17) de la plaque d'extrémité (11a, b) en matière plastique est formée de polyamide, polyoxyméthylène (POM) ou polybutylène-téréphtalate (PBT).

3. Élément filtrant cylindrique creux selon l'une des revendications précédentes, **caractérisé en ce que** la couche de matière plastique élastique (14, 16) de la plaque d'extrémité (11a, b) en matière plastique est formée d'un élastomère thermoplastique (TPE) ou d'un polyamide mou, par exemple du polyamide 12 (PA12) ou du polyamide 612 (PA612).

4. Élément filtrant cylindrique creux selon l'une des revendications précédentes, **caractérisé en ce que** la couche de matière plastique élastique (14, 16) de la plaque d'extrémité (11a, b) en matière plastique présente un contour de raccordement (18), de telle manière qu'un joint radial est formé par rapport à un élément de raccordement (19).

5. Élément filtrant cylindrique creux selon l'une des revendications précédentes, **caractérisé en ce que** la couche de matière plastique radialement élastique (14, 16) de la plaque d'extrémité (11 a, b) en matière plastique dépasse concentriquement de la couche de matière plastique rigide (13, 17) au niveau du contour de raccordement.

6. Élément filtrant cylindrique creux selon l'une des revendications 4 ou 5, **caractérisé en ce que** le contour de raccordement (18) de la plaque d'extrémité (11 a, b) en matière plastique est une ouverture circulaire disposée concentriquement par rapport à l'élément filtrant (10).

7. Élément filtrant cylindrique creux selon l'une des revendications 4 à 6, **caractérisé en ce que** le contour de raccordement (18) de la plaque d'extrémité (11 a, b) en matière plastique présente, par rapport à l'élément de raccordement (19), une configuration géométrique telle que l'élasticité radiale augmente.

8. Élément filtrant cylindrique creux selon l'une des revendications 4 à 7, **caractérisé en ce que** le contour de raccordement (18) de la plaque d'extrémité (11 a, b) en matière plastique est formé de telle manière que le montage avec l'élément de raccordement (19) s'en trouve facilité.

9. Élément filtrant cylindrique creux selon l'une des revendications précédentes, **caractérisé en ce que** la couche de matière plastique rigide (13, 17) de la plaque d'extrémité (11 a, b) en matière plastique présente des contours qui facilitent le montage avec l'élément de raccordement (19).

10. Procédé de fabrication d'un élément filtrant cylindrique creux avec au moins une plaque d'extrémité (11 a, b) en matière plastique ayant une couche rigide (13, 17) et une couche élastique (14, 16) qui présente un point de fusion thermique inférieur à celui de la couche rigide, comprenant les étapes suivantes :
- pose d'une couche de matière plastique rigide (13, 17) ainsi que d'une couche de matière plastique élastique (14, 16) dans un logement et jonction de la couche rigide (13, 17) à la couche élastique (14, 16)
ou
- pose d'une pièce en matière plastique bi-composants ayant une couche de matière plastique élastique et une couche de matière plastique rigide dans un logement,
- fusion de la couche mécaniquement élastique (14, 16) par une source d'énergie,
- insertion d'un milieu filtrant (12) dans la couche fondue,
- durcissement de la plaque d'extrémité (11 a, b).
